# EUROPÄISCHE PATENTSCHRIFT

(11) **EP 0 491 683 B1**
(45) Veröffentlichungstag und Bekanntmachung des Hinweises auf die Patenterteilung: **18.05.1994**
(21) Anmeldenummer: 89909728.1
(22) Anmeldetag: 05.09.1989
(51) Int. Cl.: B60S 3/04

(54) **FAHRZEUGWASCHANLAGE**
VEHICLE WASHING INSTALLATION
INSTALLATION DE LAVAGE DE VOITURES

(43) Veröffentlichungstag der Anmeldung: 01.07.1992
(73) Patentinhaber: Alfred Kärcher GmbH & Co., 71364 Winnenden (DE)
(72) Erfinder: NIEUWKAMP, Wolfgang, D-7150 Backnang-Heinigen (DE); SCHULZE, Werner, D-7057 Winnenden (DE)
(74) Vertreter: Hoeger, Stellrecht & Partner
(86) Internationale Anmeldenummer: EP8901033
(87) Internationale Veröffentlichungsnummer: WO9103395

(56) Entgegenhaltungen:
- DE-A- 3 635 213
- FR-A- 1 471 761
- FR-A- 2 277 704
- GB-A- 1 199 125
- PATENT ABSTRACTS OF JAPAN, Band 7, Nr. 179 (M-234)(1324), 9. August 1983

## Beschreibung

Die Erfindung betrifft eine Fahrzeugwaschanlage mit einem Träger für eine Mehrzahl von im Abstand zueinander gelagerten und rotierend angetriebenen, auf einem Kegelmantel umlaufende, gegen das Fahrzeug gerichtete Flüssigkeitsstrahlen abgebende Düsen.

Fahrzeugwaschanlagen dieser Art werden zur berührungslosen Reinigung von Kraftfahrzeugen verwendet. Es sind Anlagen bekannt, bei denen an einem Portal oder einem zu beiden Seiten eines Kraftfahrzeuges angeordneten Träger im Abstand zueinander eine größere Anzahl von Rotordüsen gelagert sind, die auf einem Kegelmantel umlaufende Punktstrahlen abgeben, wobei die Rotordüsen bei bekannten Anlagen zusätzlich eine längs des Portals oder Trägers, oszillierende Bewegung ausführen, so daß die von den Punktstrahlen beaufschlagten Bereiche des Kraftfahrzeuges von den Punktstrahlen unter verschiedenen Winkeln getroffen werden (WO-A-88/02706 oder DE-A-3635213).

Es hat sich herausgestellt, daß bei Fahrzeugwaschanlagen dieser Art zwar eine sehr gute Reinigungswirkung erzielt werden kann, daß aber die benachbarten Punktstrahlen sich gegenseitig ungünstig beeinflussen können, indem sie zusammentreffen und dadurch ihre Bündelungswirkung verlieren.

Es ist Aufgabe der Erfindung, eine gattungsgemäße Fahrzeugwaschanlage so zu verbessern, daß die Reinigungswirkung der einzelnen Punktstrahlen in allen Betriebsphasen voll erhalten bleibt.

Diese Aufgabe wird bei einer Fahrzeugwaschanlage der eingangs beschriebenen Art erfindungsgemäß dadurch gelöst, daß Jeweils benachbarte Düsen mit verschiedenem Drehsinn angetrieben sind.

Es hat sich überraschenderweise herausgestellt, daß durch diese einfache Maßnahme die unerwünschte Beeinflussung der benachbarten Punktstrahlen, bei der die Punktstrahlen aufgefächert werden und ihre Reinigungswirkung einbüßen, vermieden werden kann, allein durch diese einfache Maßnahme bleiben die Punktstrahlen scharf gebündelt, bis sie auf die zu reinigende Fläche auftreffen.

Dabei ist es besonders vorteilhaft, wenn die Düsen mit gleicher Drehgeschwindigkeit und festgelegter Phasenlage angetrieben sind.

Beispielsweise läßt sich dies dadurch verwirklichen, daß die Düsen drehfest mit Kettenrädern verbunden sind und daß eine Antriebskette mit all diesen Kettenrädern kämmt, die an benachbarten Kettenrädern auf jeweils gegenüberliegenden Seiten anliegt.

Bei einer besonders bevorzugten Ausführungsform ist vorgesehen, daß die Düse einen zentralen Rohrstutzen aufweist, der in einer axial gerichteten Düse endet und auf dem drehbar eine angetriebene Hülse gelagert ist, daß die Hülse drehfest mit einem unmittelbar vor dem Austritt der Düse des Rohrstutzens angeordneten, gebogenen Rohrstück verbunden ist und daß das Rohrstück an seinem der Düse des Rohrstutzens abgewandten Ende eine Austrittsdüse aufweist.

Besonders günstig ist es, wenn die Hülse mittels Kugellagern auf dem Rohrstutzen gelagert ist.

Die Hülse kann einen radial nach außen vorstehenden, mit einer Antriebskette kämmenden Zahnkranz tragen, der vorzugsweise auf die Hülse aufgeschoben und mit dieser drehfest verbunden ist.

Die nachfolgende Beschreibung bevorzugter Ausführungsformen der Erfindung dient im Zusammenhang mit der Zeichnung der näheren Erläuterung. Es zeigen:
- Figur 1:: eine Ansicht eines mit mehreren gegensinnig rotierenden Rotordüsen bestückten Trägers einer Fahrzeugwaschanlage von der dem Kraftfahrzeug abgewandten Seite aus gesehen;
- Figur 2:: eine Seitenansicht des Trägers der Figur 1 ;
- Figur 3:: eine Längsschnittansicht durch eine Rotordüse und
- Figur 4:: eine Längsschnittansicht durch eine andere Ausführungsform einer Rotordüse.

Die Fahrzeugwaschanlage kann die Form eines Portals haben, an dem das zu reinigende Fahrzeug entlangbewegt wird oder das sich selbst an dem zu reinigenden Fahrzeug entlangbewegt, bei anderen Ausführungsformen umfaßt die Fahrzeugwaschanlage senkrechte Pfosten oder Träger, die zu beiden Seiten des zu reinigenden Fahrzeuges angeordnet sind. Bei stationären Trägern wird das Fahrzeug an den Trägern vorbeibewegt, anderenfalls bewegen sich die Träger längs des Fahrzeuges.

In dem in der Zeichnung dargestellten bevorzugten Ausführungsbeispiel ist von einer solchen Fahrzeugwaschanlage nur ein senkrechter Träger 1 dargestellt, der auf einer ortsfesten, horizontal angeordneten Schiene 2 hängend und längs dieser Schiene verfahrbar gehalten ist. Die Schiene erstreckt sich längs der Außenkontur des in der Zeichnung nicht dargestellten, zu reinigen Kraftfahrzeuges, so daß der Träger 1 längs des gesamten Fahrzeuges bewegt werden kann.

An dem Träger sind übereinander um horizontale, senkrecht zur Kraftfahrzeuglängsrichtung angeordnete Drehachsen drehbar eine größere Anzahl von Rotordüsen 3 gelagert, von denen jede einen Punktstrahl in Richtung auf das Kraftfahrzeug abgibt. Die Düsen werden in nicht dargestellter Weise von einer Flüssigkeitsquelle versorgt, beispielsweise über eine Hochdruckpumpe.

Die Rotordüsen 3 werden durch einen gemeinsamen Antrieb um die Drehachse in Drehung versetzt. Dazu ist an dem Träger 1 eine umlaufende Antriebskette 4 gelagert, die drehfest mit den Rotordüsen 3 verbundene Kettenräder 5 derart umschlingt, daß sie bei benachbarten Kettenrädern jeweils an gegenüberliegenden Seiten dieser Kettenräder anliegt, so daß die benachbarten Rotordüsen jeweils mit entgegengesetzter Drehrichtung angetrieben werden.

Die Rotordüsen 3 geben die Punktstrahlen unter einem Winkel in der Größenordnung von maximal 20° gegenüber der Drehachse ab, das heißt bei Drehung der Rotordüsen wandern die Punktstrahlen auf einem Kegelmantel. Durch die gegensinnige Drehung der Rotordüsen wird verhindert, daß sich benachbarten Punktstrahlen gegenseitig beeinflussen und durch diese Beeinflussung, die von dem direkten Aufeinandertreffen bis zu der Wechselwirkung durch die mitgerissene Umgebungsluft reicht, ihren Charakter als kompakte Punktstrahlen verlieren.

Dieser günstige Effekt der gegensinnigen Rotation kann zusätzlich dadurch verbessert werden, daß die Kettenräder aller Rotordüsen gleich groß sind, so daß Drehgeschwindigkeit und damit auch die Phasenlage der Rotordüsen gleich bleiben. Eine besonders günstige Phasenlage ergibt sich dann, wenn beispielsweise alle Rotordüsen gleichzeitig den Strahl nach oben beziehungsweise nach unten richten, da auf diese Weise die Beeinflussung benachbarter Strahlen minimiert wird.

Zusammen mit der Verfahrbarkeit des Trägers längs der zu reinigenden Fahrzeugfläche ergibt sich damit eine besonders wirksame Reinigung der Fläche, die noch dadurch unterstützt werden kann, daß die Rotordüsen in an sich bekannter Weise auch in ihrer Höhenlage verändert werden können, beispielsweise durch eine oszillierende Auf- und Abbewegung. Eine weitere Möglichkeit liegt darin, den Träger um seine Längsachse periodisch zu verschwenken, so daß auch die Auftreffrichtung der Strahlen auf die zu reinigende Kraftfahrzeugfläche variiert werden kann.

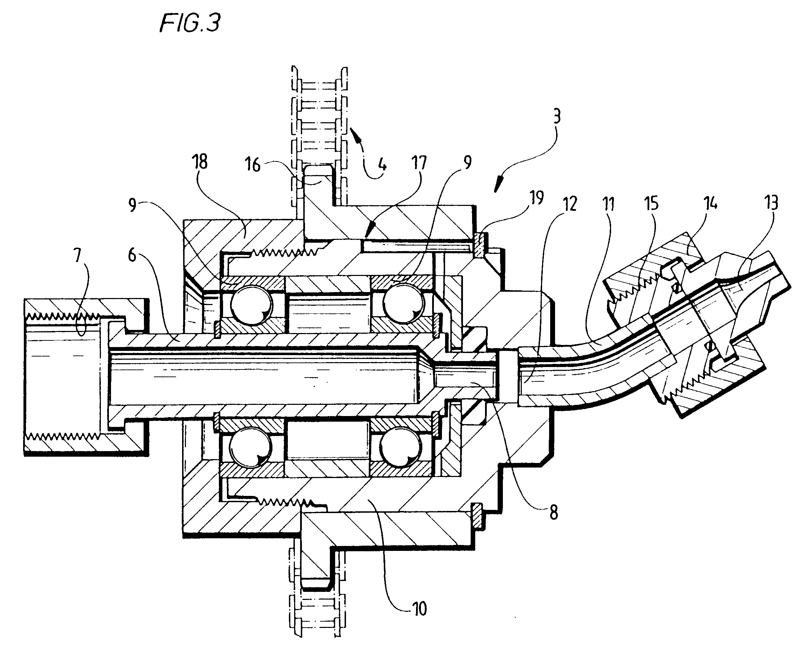

Eine für diesen Zweck besonders geeignete Düse ist in Figur 3 dargestellt. Sie umfaßt einen zentralen Rohrstutzen 6, der fest am Träger 1 gehalten ist, beispielsweise kann er mittels eines Innengewindes 7 auf einen entsprechenden Gewindestutzen am Träger 1 aufgeschraubt sein. Dieser Rohrstutzen 6 endet in einer axial gerichteten Auslaßdüse 8, die einen genau in Längsrichtung des Rohrstutzens 6 gerichteten Punktstrahl abgibt.

Auf dem Rohrstutzen 6 ist mittels Kugellagern 9 eine Hülse 10 um die Längsachse des Rohrstutzens 6 drehbar gelagert, die die Auslaßdüse 8 überfängt und drehfest mit einem Rohrstück 11 verbunden ist, dessen Einlaß 12 unmittelbar an die Auslaßdüse 8 anschließt, so daß der aus der Auslaßdüse 8 austretende Punktstrahl in das Rohrstück 11 gelangt. Dieses Rohrstück 11 ist aus der Drehachse abgebogen, beispielsweise um einen Winkel bis maximal 20°, und trägt an seinem Austrittsende eine Düse 13, die beispielsweise mittels eines Überwurfringes 14 auf ein Außengewinde 15 aufgeschraubt sein kann. Der aus der Auslaßdüse 8 austretende Punktstrahl tritt somit in das Rohrstück 11 ein, wird in diesem aus der Drehachse der Rotordüse ausgelenkt und wird dann unter dem von der Biegung des Rohrstückes 11 bestimmten Winkel durch die Düse 13 als Punktstrahl abgegeben.

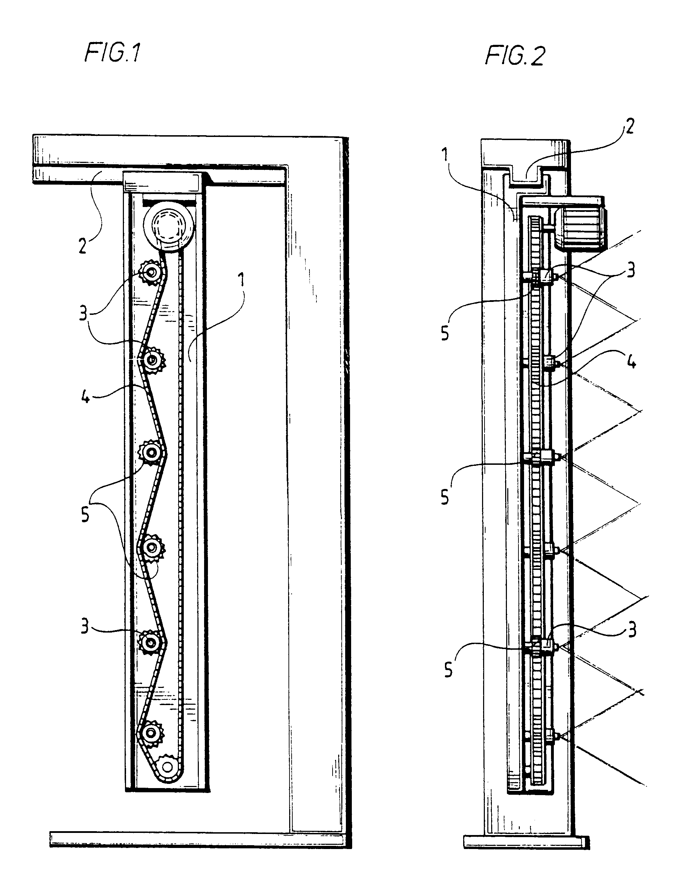

Auf die Hülse 10 ist auf der Außenseite ein Zahnkranz 16 aufgeschoben, der mittels einer Nut-Feder-Verbindung 17 drehfest mit der Hülse 10 verbunden ist und zwischen einem Anschlag 18 und einem Sprengring 19 axial unverschieblich gehalten ist. Dieser Zahnkranz 16 bildet das Kettenrad 5, mit dem die Antriebskette 4 in der anhand der Figur 1 beschriebenen Weise kämmt. Eine solche Rotordüse ist besonders einfach im Aufbau und robust ausgelegt, sie erzeugt aus der Zuführrichtung ausgelenkte Punktstrahlen, ohne merklichen Druckverlust und sie ist in einfachster Weise auswechselbar, da sie als gesamte Baueinheit am Träger festgeschraubt ist. Es ist auch möglich, die Zahnkränze 16 in einfacher Weise auszuwechseln oder gegenüber ihrer Ausgangslage zu verdrehen, so daß sowohl die Drehgeschwindigkeit der Rotordüsen als auch die Phasenlage gewählt werden können.

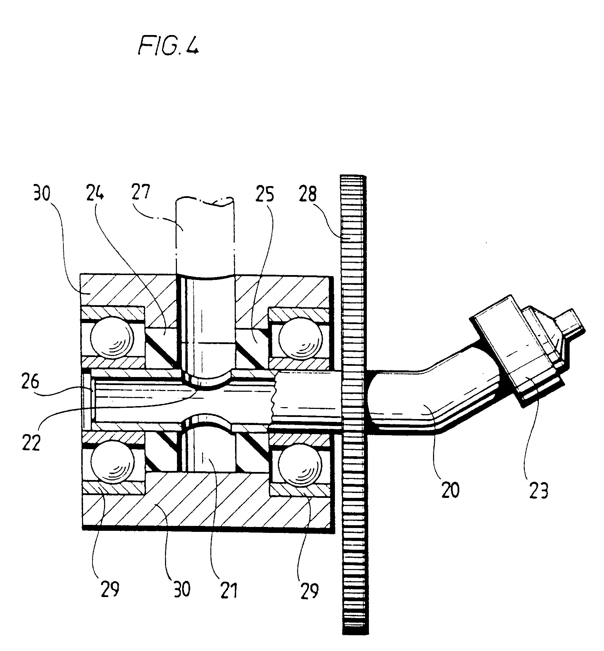

In Figur 4 ist ein abgewandeltes Ausführungsbeispiel einer Rotordüse dargestellt. Bei diesem Ausführungsbeispiel ist ein am Ende abgebogenes Rohrstück 20 an diesem freien Ende mit einer Düse 23 versehen, die ähnlich wie die Düse 13 beim Ausführungsbeispiel der Figur 3 auf dem gebogenen Rohrstück befestigt sein kann. Das Rohrstück 20 selbst ist über Kugellager 29 drehbar in einem gestellfesten Käfig 30 gelagert, der die Außenringe der Kugellager aufnimmt und zwischen den beiden Kugellagerringen einen das Rohrstück 20 umgebenden Ringraum 21 ausbildet. Dieser Ringraum 21 ist über seitliche Dichtungen 24 und 25 gegenüber den Kugellagerringen und der Außenwand des Rohrstückes 20 abgedichtet, er steht über Bohrungen 22 in der Wand des Rohrstückes 20 mit dem Innenraum des Rohrstückes 20 in Verbindung. Dieses ist an einem der Düse 23 abgewandten Ende 26 stirnseitig verschlossen.

In den Ringraum 21 mündet radial ein Anschlußrohr 27 ein, das in der Zeichnung nur strichpunktiert angegeben ist und durch welches die Reinigungsflüssigkeit zugeführt wird, die von einer Hochdruckpumpe geliefert wird.

Auf dem Rohrstück 20 ist drehfest ein Kettenrad 28 angeordnet, das in gleicher Weise wie das Kettenrad 5 mit der Antriebskette 4 kämmt.

Bei dieser Ausführungsform wird die Reinigungsflüssigkeit also im Gegensatz zur Ausführungsform der Figur 3 nicht axial sondern radial zugeführt, so daß sich in axialer Richtung eine geringe Bautiefe ergibt.

Es hat sich herausgestellt, daß mit einer Fahrzeugwaschanlage der beschriebenen Bauart aufgrund des verschiedenen Drehsinns benachbarter Rotordüsen eine deutlich verbesserte Reinigungswirkung gegenüber solchen Fahrzeugwaschanlagen erzielt werden kann, bei denen benachbarte Rotordüsen gleichsinnig umlaufen.

## Patentansprüche

1. Fahrzeugwaschanlage mit einem Träger für eine Mehrzahl von im Abstand zueinander gelagerten und rotierend angetriebenen, auf einem Kegelmantel umlaufende, gegen das Fahrzeug gerichtete Flüssigkeitsstrahlen abgebende Düsen, dadurch gekennzeichnet, daß jeweils benachbarte Düsen (3) mit verschiedenem Drehsinn angetrieben sind.

2. Anlage nach Anspruch 1, dadurch gekennzeichnet, daß die Düsen (3) mit gleicher Drehgeschwindigkeit und festgelegter Phasenlage angetrieben sind.

3. Anlage nach Anspruch 2, dadurch gekennzeichnet, daß die Düsen (3) drehfest mit Kettenrädern (5) verbunden sind und daß eine Antriebskette (4) mit all diesen Kettenrädern (5) kämmt, die an benachbarten Kettenrädern (5) auf jeweils gegenüberliegenden Seiten anliegt.

4. Anlage nach einem der voranstehenden Ansprüche, dadurch gekennzeichnet, daß die Düsen (3) einen zentralen Rohrstutzen (6) aufweisen, der in einer axial gerichteten Düse (8) endet und auf dem drehbar eine angetriebene Hülse (10) gelagert ist, daß die Hülse (10) drehfest mit einem unmittelbar vor dem Austritt der Düse (8) des Rohrstutzens (6) angeordneten, gebogenen Rohrstück (11) verbunden ist und daß das Rohrstück (11) an seinem der Düse (8) des Rohrstutzens (6) angewandten Ende eine Austrittsdüse (13) aufweist.

5. Anlage nach Anspruch 4, dadurch gekennzeichnet, daß die Hülse (10) mittels Kugellagern (9) auf dem Rohrstutzen (6) gelagert ist.

6. Anlage nach Anspruch 4 oder 5, dadurch gekennzeichnet, daß die Hülse (10) einen radial nach außen vorstehenden, mit einer Antriebskette (4) kämmenden Zahnkranz (16) trägt.

7. Anlage nach Anspruch 6, dadurch gekennzeichnet, daß der Zahnkranz (16) auf die Hülse (10) aufgeschoben und mit dieser drehfest verbunden ist.

8. Anlage nach einem der Ansprüche 1 bis 3, dadurch gekennzeichnet, daß die Düse ein gebogenes, drehbar gelagertes Rohrstück (20) aufweist, welches von einem Ringraum (21) abgedichtet umgeben ist, durch den die Reinigungsflüssigkeit über Bohrungen (22) in der Wand des Rohrstückes (20) in dessen Innenraum eintritt, und daß ein mit der Antriebskette (4) kämmendes Kettenrad (28) drehfest mit dem Rohrstück (20) verbunden ist.

## Claims

1. A vehicle washing installation having a bearer for a plurality of nozzles which are mounted at a distance from one another, are driven in rotation, revolve on a cone envelope and deliver fluid jets directed towards the vehicle, characterized in that adjacent nozzles (3) are driven in different rotational directions.

2. An installation in accordance with Claim 1, characterised in that the nozzles (3) are driven at the same rotational speed and with a determined phase relationship.

3. An installation in accordance with Claim 2, characterized in that the nozzles (3) are connected in a rotationally rigid manner to chain wheels (5) and in that a drive chain (4) meshes with all these chain wheels (5) and makes contact with alternate sides of adjacent chain wheels (5).

4. An installation in accordance with any one of the preceding Claims, characterised in that the nozzles (3) have a central connection piece (6) which ends in an axially directed nozzle (8) and on which a driven sleeve (10) is rotatably mounted, in that the sleeve (10) is connected in a rotationally rigid manner to a bent pipe piece (11) arranged immediately in front of the outlet of the nozzle (8) of the connection piece (6) and in that the pipe piece (11) has an outlet nozzle (13) at its end facing away from the nozzle (8) of the connection piece (6).

5. An installation in accordance with Claim 4, characterized in that the sleeve (10) is mounted on the connection piece (6) by means of ball bearings (9).

6. An installation in accordance with Claim 4 or 5, characterised in that the sleeve (10) bears a toothed ring (16) which projects radially outwards and meshes with a drive chain (4).

7. An installation in accordance with Claim 6, characterised in that the toothed ring (16) is pushed onto the sleeve (10) and is connected thereto in a rotationally rigid manner.

8. An installation in accordance with any one of Claims 1 to 3, characterised in that the nozzle has a bent, rotatably mounted pipe piece (20) which is surrounded in a sealed manner by an annular space (21) through which the cleaning fluid enters into the interior of the pipe piece (20) via bores (22) in the wall of the pipe piece (20), and in that a chain wheel (28) meshing with the drive chain (4) is connected to the pipe piece (20) in a rotationally rigid manner.

## Revendications

1. Installation de lavage de véhicule comprenant un support pour une pluralité de buses montées à distance les unes des autres, entraînées en rotation, qui débitent des jets de liquide tournant sur une paroi latérale de cône et dirigés vers le véhicule,
caractérisée en ce que les buses (3) adjacentes sont entraînées dans des sens de rotation différents.

2. Installation selon la revendication 1, caractérisée en ce que les buses (3) sont entraînées à la même vitesse de rotation et dans une position de phase fixe.

3. Installation selon la revendication 2, caractérisée en ce que les buses (3) sont reliées solidairement en rotation à des roues à chaîne (5) et en ce qu'une chaîne d'entraînement (4) engrène avec toutes ces roues à chaîne (5) et s'applique sur des côtés mutuellement opposés des roues à chaîne (5) adjacentes.

4. Installation selon une des revendications précédentes, caractérisée en ce que les buses (3) comprennent une tubulure centrale (6) qui se termine dans une buse (8) orientée axialement et sur laquelle est montée rotative une douille entraînée (10), en ce que la douille (10) est reliée solidairement à un tronçon de tube coudé (11) disposé directement devant la sortie de la buse (8) de la tubulure (6), et en ce que le tronçon de tube (11) présente une buse de sortie (13) à son extrémité la plus éloignée de la buse (8) de la tubulure (6).

5. Installation selon la revendication 4, caractérisée en ce que la douille (10) est montée rotative sur la tubulure (6) au moyen de roulements à billes (9).

6. Installation selon la revendication 4 ou 5, caractérisée en ce que la douille (10) porte une couronne dentée (16) qui fait saillie radialement vers l'extérieur et engrène avec une chaîne d'entraînement (4).

7. Installation selon la revendication 6, caractérisée en ce que la couronne dentée (16) est emmanchée sur la douille (10) et fixée solidairement en rotation à ce dernier.

8. Installation selon une des revendications 1 à 3, caractérisée en ce que la buse comprend un tronçon de tube (20) coudé, monté rotatif, qui est entouré à joint étanche par une chambre annulaire (21) à travers laquelle le liquide de nettoyage pénètre dans le volume intérieur du tronçon de tube en passant par des perçages (22) de la paroi de ce tronçon de tube (20), et en ce qu'une roue à chaîne (28) qui engrène avec la chaîne d'entraînement (4) est reliée solidairement en rotation au tronçon de tube (20).
